Europäisches Patentamt

European Patent Office · (11) Numéro de publication: **0 029 510**

Office européen des brevets **B1**

(12) **FASCICULE DE BREVET EUROPEEN**

⑱

(45) Date de publication du fascicule du brevet: **12.09.84** (51) Int. Cl.³: **A 23 N 15/04**

(21) Numéro de dépôt: **80106545.9**

(22) Date de dépôt: **25.10.80**

(54) **Machine à éplucher des légumes.**

(30) Priorité: **15.11.79 SE 7909426**

(43) Date de publication de la demande:
**03.06.81 Bulletin 81/22**

(45) Mention de la délivrance du brevet:
**12.09.84 Bulletin 84/37**

(84) Etats contractants désignés:
**AT BE CH DE FR GB IT LI NL**

(56) Documents cités:
**FR-A-1 486 260**
**FR-A-2 102 928**
**FR-A-2 275 158**

(73) Titulaire: **FRISCO-FINDUS AG**
**CH-9400 Rorschach (CH)**

(72) Inventeur: **Akesson, Ingve Reinhold**
**Bankogardsgatan 37**
**Hälsingborg (SE)**

Courier Press, Leamington Spa, England.

## Description

L'invention se rapporte à une machine à éplucher des légumes.

L'épluchage des choux de Bruxelles s'effectue en général par sectionnement de la partie basale qui relie le chou à la tige et par enlèvement d'une ou de plusieurs feuilles extérieures, car celles-ci sont souvent dures et tachées.

Le brevet FR—A—1 486 260 décrit une machine à éplucher les légumes, en particulier les choux de Bruxelles. Cette machine comprend un couteau rotatif parcourant le fond d'un canal dont les paroid sont les côtés de deux flasques circulaires rotatifs tournant selon le même axe de rotation mais à vitesse différente du couteau et qui est couvert sur une partie de sa longueur par un support élastique immobile disposé selon un arc en partie concentrique à la trajectoire du couteau, les flasques agissant conjointement avec le support élastique pour imposer aux légumes à la fois un mouvement de translation le long du canal et de roulement sur eux-mêmes.

Le couteau consiste de préférence en une roue dont la périphérie comporte des lames de coupe et les flasques entourent la roue, chacun comportant un plan incliné vers la roue, de manière que le canal ait une section trapézoïdale. Les deux flasques sont aussi de préférence montés de manière à tourner dans le même sens que la roue, mais à une vitesse angulaire beaucoup plus basse. La distance séparant les deux flasques peut être modifiée de manière à être adaptée à des légumes ayant des dimensions différentes.

Conformément au brevet précité, le support consiste de préférence en une glissière fixe ayant la forme d'un secteur périphérique dont le côté intérieur forme la couverture du canal et qui est revêtu d'une couche de matière molle et élastique, par exemple d'une mousse de caoutchouc ou de matière plastique. Lorsque les légumes sont enserrés dans le canal trapézoïdal entre les plans inclinés des flasques rotatifs et la couverture élastique qui ne prend pas part au mouvement de rotation, ils subissent un mouvement de rotation autour d'eux-mêmes et sont simultanément entraînés par le mouvement des flasques le long de la périphérie de leurs parois inclinées. Au cours de ce mouvement composite, les légumes se présentent dans la plupart des cas au moins une fois en position telle que l'extrémité de leur tige se trouve en face du fond du canal et ressorte suffisamment entre les flasques pour que les lames du couteau rotatif puissent l'atteindre et en couper la partie qui émerge avec une ou plusieurs des feuilles extérieures dont le point d'attache se trouve à proximité de l'extrémité du bas de la tige. Les légumes épluchés sont ensuite séparés des tiges et des feuilles coupées dans un appareil indépendant.

L'expérience a montré que la machine telle que décrite ci-dessus donne d'excellents résultats à l'utilisation, mais il s'est aussi révélé qu'elle peut être susceptible de quelques perfectionnements à certains égards. Cette remarque concerne en particulier le support qui est destiné à serrer les légumes élastiquement dans le canal formé par les flasques afin qu'ils soient réellement amenés à rouler sur eux-mêmes et que l'extrémité de la tige soit alors mise en contact avec le couteau.

Dans le mode de réalisation généralement mis en oeuvre, le support a consisté en une glissière fixe qui forme un secteur de jante et l'élasticité a été obtenue par une couche relativement épaisse de mousse de matière plastique ou de caoutchouc qui revêt la surface intérieure de la glissière fixe, cette couche formant ainsi la couverture du canal. Il a été observé toutefois que, lorsque les légumes frottent contre la matière plastique ou le caoutchouc dans un environnement relativement humide, la matière qui a été enlevée par usure et s'est déposée sur ce revêtement rend parfois la matière plastique ou le caoutchouc très glissant et donc que celui-ci ne peut plus apporter le frottement nécessaire à imposer le mouvement nécessaire de roulement aux légumes. Il faut donc nettoyer fréquemment le matériel, ce qui nécessite le démontage de la machine.

Il se produit de plus parfois un colmatage lorsque deux têtes de choux de Bruxelles ou davantage se coincent simultanément dans le canal entre les flasques. Dans l'appareillage utilisé jusqu'à présent, ce colmatage nécessite aussi le démontage de la machine, ce qui prend beaucoup de temps.

Il est finalement souhaitable de pouvoir régler la distance entre le support et le canal compris entre les flasques pour adapter la machine à différentes classes de dimension des légumes. Ce réglage est aussi difficile dans la machine connue qui n'est pas prévue pour pouvoir être facilement modifiée dans ce sens.

Le brevet FR—A—2'275'158 concerne une machine à parer les choux de Bruxelles comportant un tambour rotatif contre lequel s'appuient des organes presseurs reliés les uns aux autres et espacés les uns des autres sur toute la largeur du tambour et montés sur des traverses elles-mêmes montées sur deux flasques de profil curviligne concentrique à la section du tambour et sollicitées élastiquement vers la surface de celui-ci, les flasques curvilignes portant des arbres rotatifs sur lesquels sont calés des rouleaux dépouilleurs. Selon l'antériorité les organes presseurs sont montés par l'intermédiaire de traverses, sur des flasques formant un cadre rigide articulé et monté suspendu et élastique, en regard de toute la surface du tambour, les légumes étant pressés entre ceux-ci et le tambour. Ce cadre s'éloigne du cylindre chaque fois qu'une tige passe dans la machine. Cette machine arrache les choux des tiges et est donc de conception très éloignée de celle de la présente demande dans laquelle les restes de tiges sont coupés par un organe de coupe et les éléments presseurs sont également montés sur un cadre qui est lui-même flexible, mais ceci n'est pas nécessaire à son fonctionnement. Cette machine présente également les inconvénients tels que le colmatage, la nécessité de démonter souvent pour nettoyer et les difficultés de réglage mentionnés ci-dessus.

La machine de l'invention élimine les inconvénients précités. Elle est caractérisée par le fait que le support élastique est constitué de plaques montées de manière à être soumises chacune à une force élastique et à pouvoir pivoter chacune contre cette force autour d'un axe parallèle à l'axe de rotation du couteau et des flasques, ces plaques étant disposée à chevauchement et suivant un certain espacement les unes par rapport aux autres le long du canal, leur extrémité libre étant orientée dans le sens de rotation des flasques.

L'invention va être décrite plus en détail en regard des dessins annexés à titre d'exemple nullement limitatif et sur lesquels:

— la figure 1 est une coupe de la machine selon la ligne I—I de la figure 2; et
— la figure 2 est une vue de face schématique de la machine.

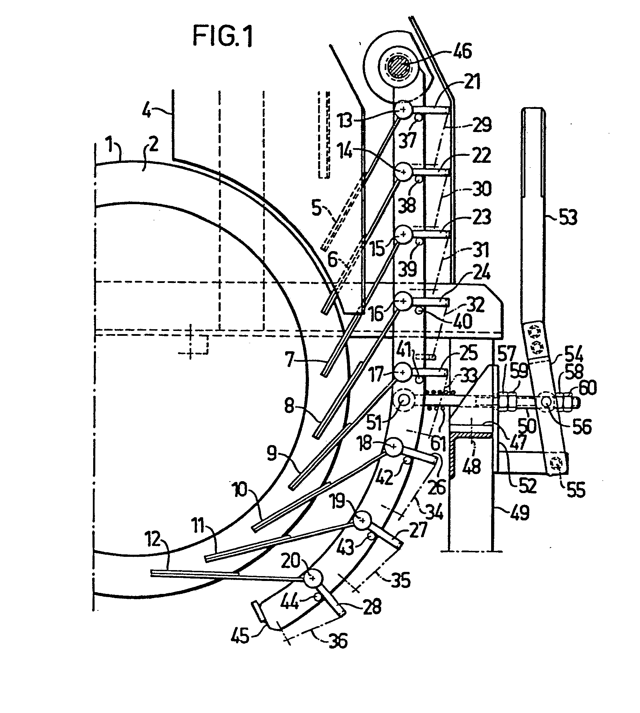

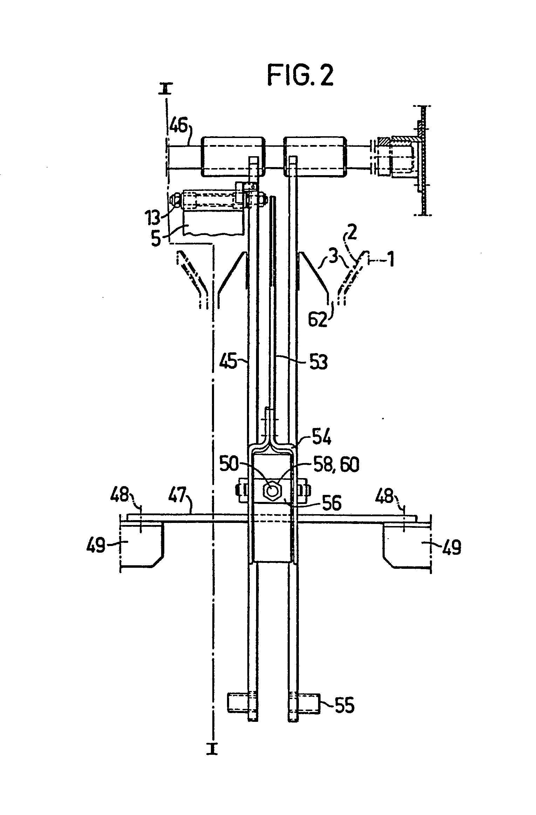

La figure 1 représente schématiquement en 1 l'un des flasques rotatifs formant le canal ainsi que le plan incliné 2 formant une cloison du canal trapézoïdal 3 (figure 2). Les légumes sont déversés dans la machine par une trémie indiquée en 4 et pénètrent dans l'espace trapézoïdal compris entre les flasques de manière à suivre ceux-ci au cours de leur rotation. Pour faciliter l'entraînement en rotation des légumes, les plans inclinés formés par les flasques comportent de préférence des rainures ou des nervures radiales destinées à augmenter le frottement.

Le support formant la couverture intérieure du canal 3 consiste en plusieurs plaques sensiblement planes 5 à 12. Celles-ci sont montées de manière à pouvoir pivoter sur des arbres fixes 13 à 20 qui sont sensiblement parallèles à l'axe de rotation du couteau et des flasques rotatifs. Des bras radiaux 21 à 28 étant aussi montés sur les arbres 13 à 20 et ces bras étant solidarisés avec les plaques correspondantes et fixés à des ressorts de traction 29 à 36, le mouvement de rotation des plaques s'effectue contre une force élastique et la rotation des plaques vers l'intérieur et vers le canal situé entre les flasques est limitée par des chevilles de butée 37 à 44. Les plaques sont de préférence planes, mais peuvent aussi être légèrement recourbées. Leur partie extrême située en face du canal peut être trapézoïdale de manière à s'adapter à la section transversale du canal.

Les arbres 13 à 20 sur lesquels les plaques sont montées et les bras radiaux sont disposés sur un dispositif de support dénommé bras de support 45 pouvant pivoter autour d'un arbre 46 qui est sensiblement parallèle à l'axe de rotation du couteau et des flasques.

Une barre de traction 50 est aussi articulée sur le bras de support a moyen d'un arbre 51. La barre de traction traverse une plaque de guidage 52 fixée à une traverse 47 et son autre extrémité est articulée sur un levier 53 qui, à son lieu d'articulation à la barre de traction, est conformé en chape 54 dont le lieu de montage 55 sur la traverse 47 forme le centre de pivotement du levier.

La barre de traction 50, qui passe à travers une traverse 56 assujettie à la chape, est filetée à cette extrémité sur laquelle sont montés des écrous 57 et 58 ainsi que des contre-écrous 59 et 60. La barre de traction 50 et le bras de support 45 ainsi que les plaques montées sur ce dernier sont repoussés par un ressort de compression 61 contre le canal 3 situé entre les flasques et il est possible de régler la position du bras de support au moyen de l'ecrou 57 et du contre-écrou 59. La position du levier peut être réglée au moyen de l'écrou 58 et du contre-écrou 60. La traverse 47 est reliée au bras de support et fixée de manière amovible au bâti 49 de la machine au moyen de boulons 48 ou autres dispositifs de fixation.

La figure 2 est une vue de face schématique de la machine de l'invention (vue de la droite de la figure 1). Cette figure représente deux paires de flasques rotatifs 1 ainsi que leurs plans inclinés 2 qui forment le canal trapézoïdal 3. Pendant le mouvement de roulement, la tige des légumes peut être amenée à ressortir de l'ouverture 62 ménagée dans le fond du canal de manière qu'elle puisse être coupée par le couteau rotatif (non représenté). L'une des plaques mobiles, à savoir la plaque 5 est indiquée avec son arbre 13 monté sur le bras de support 45, cette figure représentant aussi l'arbre 46 de support du bras 45. Celui-ci est relié de manière amovible au bâti de la machine par la traverse 47, une partie de ce bâti étant représentée en 49. La barre de traction 50 est aussi reliée au bras de support, cette barre étant montée de son côté sur la chape 54 du levier 53 au moyen de la traverse 56 et des écrous 58 et 60.

La figure 2 montre aussi la manière dont deux séries de plaques de deux canaux sont commandées au moyen de deux bras de support par l'intermédiaire d'un levier commun. Ce montage convient bien en pratique, mais n'est pas absolument nécessaire pour le fonctionnement de la machine. Il est aussi possible de commander au moyen d'un levier un unique groupe de plaques d'un unique canal ou de commander plus de deux groupes de plaques au moyen d'un levier unique.

La distance séparant les plaques et le canal peut être facilement réglée en faisant tourner l'écrou 57 qui peut être arrêté par le contre-écrou 59, après quoi il est immobilisé par la force d'un ressort de compression 61. Donc, ce ressort 61 doit avoir une force qui soit considérablement supérieure à celle des ressorts 29 à 36 qui appliquent les plaques contre les flasques. Il est donc facile de régler la machine pour le traitement de légumes de catégories dimensionnelles différentes. La position de réglage ne se modifie pas à la longue comme tel est le cas du support de la machine connue et décrite en préambule.

Une traction exercée sur le levier 53 vers l'extérieur et contre la force du ressort de compression 61 provoque le déplacement sur une courte distance du bras de support 45 et de toutes les plaques qui sortent légèrement du canal 3. Ainsi, l'espace situé à l'intérieur et au-dessus du canal s'élargit et il est possible ainsi d'éliminer facilement et de faire disparaître le long du parcours descendant normal les colmatages pouvant être provoqués par plusieurs légumes coincés simultanément dans le canal. Lorsqu'ensuite le levier est libéré, le bras de support et les plaques retournent à leur position de préréglage.

Le desserrage des boulons 48 libère la traverse 47 de ses points de fixation au bâti et en conséquence libère aussi le bras de support 45. Il est possible alors de faire pivoter ce bras autour de l'arbre 46 avec les plaques qui suivent ce mouvement. Les plaques et donc aussi les flasques sont alors facilement accessibles pour les vérifications, le nettoyage et les réparations. Lorsque le bras de support est ensuite refixé au bâti au moyen de la traverse, le même réglage de la distance séparant les plaques et le canal que celui qui a été effectué précédemment peut être rétabli et il n'est pas nécessaire de procéder à un nouveau réglage.

L'extrémité des plaques mobiles 5 à 12 est de préférence conformée de manière qu'elles suivent le profil du canal trapézoïdal 3. Il n'est toutefois pas nécessaire que l'adaptation soit étroite, mais un jeu de l'ordre de quelques millimètres est possible entre les bords des plaques et la surface du canal formé par les flasques rotatifs.

Par ailleurs, les plaques sont revêtues du côté situé en face du canal trapézoïdal d'une matière qui augmente le frottement et qui est de préférence aussi relativement molle afin de ne pas dégrader les légumes. Une matière qui convient consiste en un matelas de caoutchouc ou de matière plastique qui toutefois ne doit pas nécessairement être en mousse comme dans la machine de l'art antérieur. Cette matière peut aussi comporter des rainures ou des nervures sensiblement perpendiculaires à la trajectoire périphérique du mouvement du couteau et des flasques rotatifs afin d'accroître le frottement. Le mouvement de rotation des légumes est ainsi favorisé.

La force avec laquelle les plaques sont appliquées contre le canal peut être facilement réglée par le choix de différents types de ressorts de traction 29 à 36. La force de ces ressorts doit être réglée de manière à ne pas être trop faible, car dans ce cas le mouvement nécessaire de roulement ne se produirait pas, ni trop forte, car alors le risque de colmatage augmente. Il est vrai que le colmatage peut facilement être supprimé au moyen du dispositif de l'invention, mais ceci signifie une réduction de la capacité de la machine. Une force convenable des ressorts peut facilement être trouvée par de simples essais de routine.

Le mode de construction mécanique de la machine de l'invention n'est pas difficile pour le spécialiste de cette technique sur la base de la description qui précède. Le mode de réalisation et le fonctionnement du couteau rotatif et des flasques rotatifs ainsi que les éléments d'amenée et de décharge des légumes avant et après épluchage sont semblables à ceux de la machine du brevet FR—A—1 486 260 précité, ce brevet étant expressément cité à titre de référence. Il faut bien entendu tenir compte du fait que le mode de réalisation et les matériaux de la machine doivent permettre de traiter les aliments de manière irréprochable du point de vue de l'hygiène. Il faut ainsi pouvoir nettoyer la machine de manière simple, par example par lavage sous haute pression. A cet égard, la disposition de l'invention apporte des avantages considérables sur la machine connue dans laquelle un support de mousse de caoutchouc ou de matière plastique est utilisé.

Ces matières sont toujours très difficiles à nettoyer, car les impuretés peuvent facilement demeurer dans les cellules ou pores de la matière. De plus, il est beaucoup plus facile d'atteindre les pièces de la machine de l'invention qui sont en contact avec les légumes, car l'ensemble des plaques et de leurs supports peuvent facilement être basculés latéralement.

La description et les dessins se rapportent à un mode de réalisation d'une machine comprenant huit plaques soumises à une force élastique. Il doit toutefois être bien entendu que ce nombre peut varier en fonction de la dimension de la machine et d'autres facteurs. Il a été observé que huit plaques conviennent bien pour une machine d'épluchage de choux de Bruxelles.

Le mode de montage des plaques rotatives représentées, soumises à une force élastique, n'a aussi été indiqué qu'à titre d'exemple. Il est possible d'utiliser aussi par exemple des ressorts en spirale reliés aux axes rotatifs des plaques au lieu des bras radiaux et des ressorts de traction représentés, ce type de montage étant évident pour un mécanicien. D'autres modifications peuvent aussi être apportées à la machine de l'invention sans sortir du domaine de cette dernière.

Le support selon l'invention qui est destiné à une machine de type connu apporte de nombreux avantages essentiels. Ainsi, la machine peut être facilement réglée pour des légumes d'une classe déterminée de dimensions et ce réglage ne disparaît pas lorsque la machine est démontée pour les réparations, mais il demeure inchangé après assemblage.

Les colmatages occasionnels de la machine peuvent être facilement éliminés sans démontage et il est possible de procéder à un démontage de manière très simple, ce qui est également avantageux du point de vue de l'hygiène.

## Revendications

1. Machine à éplucher les légumes, notamment les choux de Bruxelles, comprenant un couteau rotatif parcourant le fond d'un canal (3) dont les parois (2) sont les côtés de deux flasques circulaires rotatifs (1) tournant selon le même axe de rotation mais à vitesse différente du couteau et qui est couvert sur une partie de sa longueur par un support élastique immobile disposé selon un arc en partie concentrique à la trajectoire du couteau, les flasques (1) agissant conjointement avec le support élastique pour imposer aux légumes à la fois un mouvement de translation le long du canal (3) et de roulement sur eux-mêmes, caractérisée par le fait que le support élastique est constitué de plaques (5—12) montées de manière à être soumises chacune à une force élastique (29—36) et à pouvoir pivoter chacune contre cette force autour d'un axe parallèle (13—20) à l'axe de rotation du couteau et des flasques, ces plaques étant disposées à chevauchement et suivant un certain espacement les unes par rapport aux autres le long du canal (3), leur extrémité libre étant orientée dans le sens de rotation des flasques (1).

2. Machine selon la revendication 1, caractérisée en ce que les flasques (1) sont montés de manière à tourner dans le même sens que le couteau et à une vitesse angulaire inférieure à celle de ce dernier.

3. Machine selon l'une des revendications 1 et 2, caractérisée en ce que la partie extrême des plaques (5—12), qui est située en face du canal (3), est trapézoïdale de manière à s'adapter à la section transversale de celui-ci, qui est elle-même trapézoïdale par suite de la partie périphérique inclinée des faces internes des flasques (1).

4. Machine selon l'une quelconque des revendications 1 à 3, caractérisée en ce que le côté des plaques (5—12) qui est en face des légumes est recouvert d'une matière qui augmente le frottement et qui de préférence est molle.

5. Machine selon l'une quelconque des revendications 1 à 4, caractérisée en ce que le côté des plaques (5—12), qui est situé en face des légumes, est rainuré transversalement par rapport à la direction circonférentielle du mouvement du couteau.

6. Machine selon l'une quelconque des revendications 1 à 5, caractérisée en ce que toutes les plaques (5—12) sont montées sur un support (45) qui peut pivoter autour d'un arbre (46) parallèle à l'axe de rotation du couteau, ces plaques (5—12) pouvant être basculées simultanément de manière à être écartées du canal (3).

7. Machine selon l'une quelconque des revendications 1 à 6, caractérisée en ce que la distance séparant les plaques (5—12) et le canal (3) est réglable à une valeur variable prédéterminée qui est ensuite maintenue inchangée pendant la marche de la machine.

8. Machine selon la revendication 7, caractérisée en ce que la distance comprise entre les plaques (5—12) et le canal (13) est maintenue au moyen de la force d'un ressort (61) et peut occasionnellement être accrue en surmontant cette force de ressort, puis reprendre sa valeur préalablement réglée.

9. Machine selon la revendication 8, caractérisée en ce que ladite force de ressort (61) est supérieure à la force totale des ressorts (29—36) à laquelle est soumis l'ensemble des plaques formant la couverture du canal.

## Patentansprüche

1. Maschine zum Schälen von Gemüse, insbesondere von Rosenkohl, mit einem Drehmesser, das durch den Boden eines Kanals (3) läuft, dessen Wände (2) von den Seiten zweier umlaufender Kreisflanschen (1) gebildet werden, die mit gleicher Drehachse wie das Messer aber mit niedrigerer Geschwindigkeit umlaufen, und der über einen Teil seiner Längserstreckung von einer unbeweglichen, nachgiebigen Abstützung bedeckt ist, die bogenartig teilweise konzentrisch zu der Bahnlinie das Messers verläuft, wobei die Flansche (1) mit der nachgiebigen Abstützung in der Weise zusammenwirken, daß die Gemüse gleichzeitig eine Translationsbewegung in Richtung des Kanals (3) und eine Rollbewegung um ihre eigene Achse ausführen, dadurch gekennzeichnet, daß die nachgiebige Abstützung aus Platten (5 bis 12) besteht, die so angebracht sind, daß jede von ihnen einer Federkraft (29 bis 36) unterworfen ist und sich gegen diese Federkraft um eine Achse (13 bis 20) zu drehen vermag, die parallel zur Drehachse des Messers und der Flanschen verläuft, und daß diese Platten einander überlappend und mit einem gewissen gegenseitigen Abstand längs des Kanals (3) angeordnet sind, wobei ihr freies Ende in Drehrichtung der Flanschen (1) zeigt.

2. Maschine nach Anspruch 1, dadurch gekennzeichnet, daß die Flanschen (1) derart angebracht sind, daß sie sich in gleicher Richtung wie das Messer drehen, jedoch mit einer Winkelgeschwindigkeit, die niedriger ist als diejenige des Messers.

3. Maschine nach Anspruch 1 oder 2, dadurch gekennzeichnet, daß der Endteil der Patten (5 bis 12), der dem Kanal (3) gegenübersteht, Trapezform hat und sich dadurch dem Kanalquerschnitt anpaßt, der seinerseits wegen des schrägstehenden Randteils der Innenflächen der Flanschen (1) trapezförmig ist.

4. Maschine nach einem der Ansprüche 1 bis 3, dadurch gekennzeichnet, daß die den Gemüsen gegenüberstehende Seite der Platten (5 bis 12) mit einem reibungserhöhenden Werkstoff bedeckt ist, der vorzugsweise nachgiebig ist.

5. Maschine nach einem der Ansprüche 1 bis 4, dadurch gekennzeichnet, daß die den Gemüsen gegenüberliegende Seite der Platten (5 bis 12) quer zur Umfangsrichtung der Messerbewegung gerillt ist.

6. Maschine nach einem der Ansprüche 1 bis 5, dadurch gekennzeichnet, daß alle Platten (5 bis 12) an einem Halter (45) angebracht sind, der um eine Welle (46) schwenkbar ist, die parallel zu der Drehachse des Messers verläuft, und daß die Platten (5 bis 12) gleichzeitig derart kippbar sind, daß sie Abstand von dem Kanal (3) haben.

7. Maschine nach einem der Ansprüche 1 bis 6, dadurch gekennzeichnet, daß der zwischen den Platten (5 bis 12) und dem Kanal (3) bestehende Abstand auf einen vorbestimmten, veränderbaren Wert einstellbar ist, der danach während des Laufs der Maschine unverändert gehalten wird.

8. Maschine nach Anspruch 7, dadurch gekennzeichnet, daß der Abstand zwischen den Platten (5 bis 12) und dem Kanal (3) durch die Kraft einer Feder (61) aufrechterhalten wird und gelengentlich vergrößert werden kann, indem eine die Federkraft übersteigende Kraft angebracht wird, und der dann wieder seinen vorherigen, eingestellten Wert annimmt.

9. Maschine nach Anspruch 8, dadurch gekennzeichnet, daß die genannte Kraft der Feder (61) größer ist als die Summe der Kräfte der Federn (29 bis 36), der die Gesamtheit der die Abdeckung des Kanals bildenden Platten unterworfen ist.

**Claims**

1. A machine for trimming vegetables, especially Brussels sprouts comprising a rotary cutter movable along the bottom of a channel (3) the walls (2) of which are the sides of two circular rotary flasks (1), which pivot about the same rotating axis but at a speed different from that of the cutter, and said channel is covered on part of its length by a stationary resilient holding means forming an arch which is partly concentric with the path of the cutter, said flasks (1) co-operating with said resilient holding means to impart a simultaneous rolling movement of the vegetables around themselves and a sliding of them along the channel (3), characterized in that the resilient holding means is formed as a number of planar plates (5, 12), which are arranged to be subjected to a resilient force (29, 36) and to be pivotable against said force about axes (13, 20) parallel to the axis of rotation of the cutter and of the flasks and are overlapping each other at certain intervals along the channel (3) with the free ends of the plates pointing in the direction of rotation of the flasks (1).

2. The machine as claimed in claim 1, characterized in that the flasks (1) are adapted to rotate in the same direction as the cutter and at a lower angular speed than the cutter.

3. The machine as claimed in claims 1 and 2, characterized in that the ends of the plates (5, 12) facing the channel (3) are trapezoïdally shaped so that they substantially conform to the contour of the channel.

4. The machine as claimed in anyone of claims 1—3, characterized in that the side of the plates (5, 12) facing the vegetables is covered with a preferably soft, friction increasing material.

5. The machine as claimed in anyone of claims 1—4, characterized in that the side of the plates (5, 12) facing the vegetables is grooved transversely to the peripheral direction of motion of the cutter.

6. The device as claimed in anyone of claims 1—5, characterized in that all the plates are arranged on a holding means (45), which is pivotable around a shaft (46) parallel to the axis of rotation of the cutter, whereby the plates (5, 12) can be simultaneously swung away from the channel (3).

7. The device as claimed in anyone of claims 1—6, characterized in that the distance between the plates (5, 12) and the channel (3) is adjustable to a predetermined, variable value, which is then maintained unchanged during the operation of the machine.

8. The machine as claimed in claim 7, characterized in that the distance between the plates (5, 12) and the channel (3) is maintained by means of the force of a spring (61) and that it can be occasionally increased by overcoming this spring force, and then return to the pre-set value.

9. The machine as claimed in claim 8, characterized in that said force of spring (61) is greater than the total force of springs (29, 36) under the action of which are the plates covering the channel.

# FIG.1

## FIG. 2